# EUROPEAN PATENT SPECIFICATION

(11) **EP 0 533 448 B1**
(45) Date of publication and mention of the grant of the patent: **05.03.2003**
(21) Application number: 92308411.5
(22) Date of filing: 16.09.1992
(51) Int. Cl.: G06K 19/16, G06K 19/14

(54) **Authenticity identifying system for information storage cards**
Echtheitserkennungseinrichtung für Informationsspeicherkarten
Système d'identification de l'authenticité pour cartes de stockage d'informations

(30) Priority: 16.09.1991 JP 26276491
(43) Date of publication of application: 24.03.1993
(73) Proprietor: NHK SPRING CO.LTD., Yokohama-shi, Kanagawa-ken (JP)
(72) Inventor: Hoshino, Hidekazu, Yokohama-shi, Kanagawa-ken (JP); Haga, Hidemi, Yokohama-shi, Kanagawa-ken (JP)
(74) Representative: Browne, Robin Forsythe, Dr.

(56) References cited:
- EP-A- 0 075 674
- EP-A- 0 412 316
- DE-A- 2 659 639

## Description

### TECHNICAL FIELD

The present invention relates to a system for determining or identifying authenticity of information storage cards by means of a reader/writer to prevent unauthorized fabrication and alteration of such cards. The information storage cards include, not exclusively, magnetic cards, IC cards, optical cards and so on which are capable of exchanging information with reader/writers.

### BACKGROUND OF THE INVENTION

Conventionally, to the end of preventing the forgery of, for instance, a magnetic card, it has been practiced to use a laminated structure for its magnetic layer, and to punch holes in the magnetic card when the magnetic card is not intended for repeated use. However, such structures can be duplicated with deceitful intention by the forgers with relative ease, and may not be sufficient to discourage attempts to illegally duplicate and alter the card. The internal structure of the card may be made more complex by known means, but it will lead to the complication and cost increase of the reader/writers for reading and writing information into and out of the card.

EP-A-0075764 discloses a machine readable verification system in which a document (which can be a credit card) is provided with a light diffracting structure 2 comprising M substructures. The diffracting structure has sawtooth grooves on its surface, the effective height of which is an odd multiple of the wavelength of the light illuminating the structure, and the sawtooth base length of which is at least three times that wavelength. The diffracting structure is illuminated by a light beam 5, and the diffracted light is focused by a lens 9 onto photodetectors 10 to 14.

In the arrangement of this publication, the diffraction figures are non-symmetrical and non-periodic geometric arrangements in order to maximise the difficulty with which the device can be forged. In order to generate a signal that a particular diffraction structure is valid, every feature of the verification means must be detected.

EP-A-0412316 discloses an authenticity identification system for information storage cards, in which a card carries an identification region 4 which may be identified by means of an optical sensor 7, the identification region having processed surfaces having certain reflective directivities.

### BRIEF SUMMARY OF THE INVENTION

In view of such problems of the prior art, a primary object of the present invention is to provide a system for determining authenticity of an information storage card by certain identification means which is hard to duplicate for any authorised person but can be easily identified with a card reader/writer without increasing its complexity.

A second object the present invention is to provide an information storage card which is suitable for use in such a system.

These and other objects of the present invention can be accomplished by providing a system for determining authenticity of an information storage card in which a system for determining authenticity of an information storage card, the system comprising a card reader and an information storage card, wherein:
said card comprises an information carrier for storing information in coded form so as to be accessed by a card reader/writer, and at least one identification region having a unique optical property thereon; and
said card reader/writer comprises:
   means for accessing said coded information;
   light emitting means for projecting incident light upon the or each said identification region carried by said card,
   light receiving means for detecting light reflected by or transmitted through the or each said identification region, and
   an identification circuit for evaluating said light received by said light receiving means and producing a signal for indicating authenticity of said card,
wherein said light receiving means is provided with a plurality of parts, each of which is capable of individually detecting light reflected by or transmitted through the or each said identification region, said identification circuit determines authenticity of said card according to a combination of said parts which detected light from at least one said identification region, and at least one said identification region comprises a plurality of segments having at least two kinds of reflective or transmissive directivities which are arranged substantially closely to one another within said identification region, so that all of said segments may be accessed simultaneously by said incident light projected from said light emitting means,
characterised in that:
said segments are arranged in a repeating alternating fashion or in a repeating chequered pattern.

Thus, the forgery of such cards is made significantly more difficult than was heretofore since the identification region consists of a plurality of segments having different reflective or transmissive optical properties, such as small areas of holograph, or diffraction grating, or small areas provided with a multiplicity of parallel grooves, which may be made difficult to analyze or duplicate to a desired extent. However, identification of the authenticity of the card can be carried out without increasing the complexity of the process of identifying the card since it can be accomplished simply by providing one or more photosensitive light receiving means.

### BRIEF DESCRIPTION OF THE DRAWINGS

Now the present invention is described in the following with reference to the appended drawings, in which:
Figure 1 is a perspective view of a card and an essential part of a card reader/writer according to a first embodiment of the card authenticity determining system according to the present invention;
Figure 2 is an enlarged bottom view of the light emitting/receiving device of Figure 1;
Figure 3 is an enlarged plan view of the identification region of the first embodiment;
Figure 4 is a view similar to Figure 2 showing a typical pattern of the light received by the different parts of the light receiving device;
Figures 5 and 6 are views similar to Figures 3 and 4 showing a second embodiment of the present invention;
Figures 7 and 8 are views similar to Figures 3 and 4 showing a third embodiment of the present invention;
Figure 9 is a perspective view similar to Figure 1 showing a fourth embodiment of the present invention;
Figure 10 is a view similar to Figure 3 showing a fifth embodiment of the present invention.

### DETAILED DESCRIPTION OF THE PREFERRED EMBODIMENTS

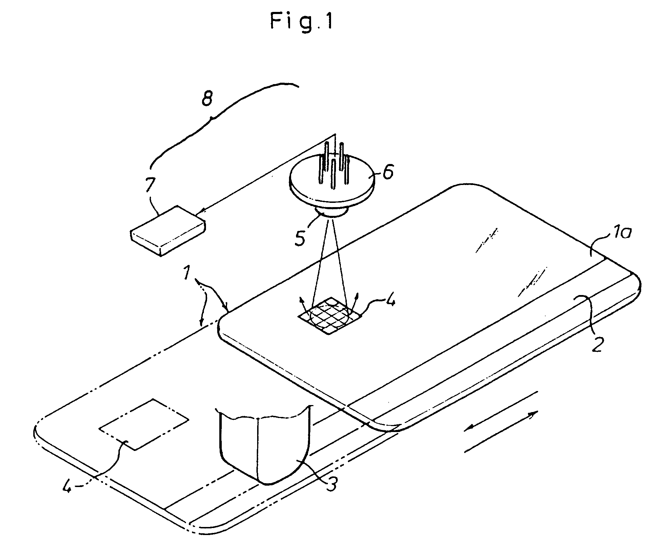

Figure 1 shows a first embodiment of the authenticity identifying system according to the present invention which comprises a magnetic card 1 and a card reader/writer 8. The card 1 is conveyed within the card reader/writer 8 in the direction indicated by the arrows by conveyer rollers not shown in the drawings. A magnetic head 3 included in the card reader/writer 8 writes and read information into and out of a magnetic stripe 2 provided on a major surface 1a of the magnetic card 1.

An identification region 4 consisting of an area of diffraction grating is provided on the major surface 1a of the card 1 next to the magnetic stripe 2. This identification region 4 is provided with a property to reflect incident light of a given wave length projected perpendicularly onto the identification region 4 to prescribed directions as diffraction light.

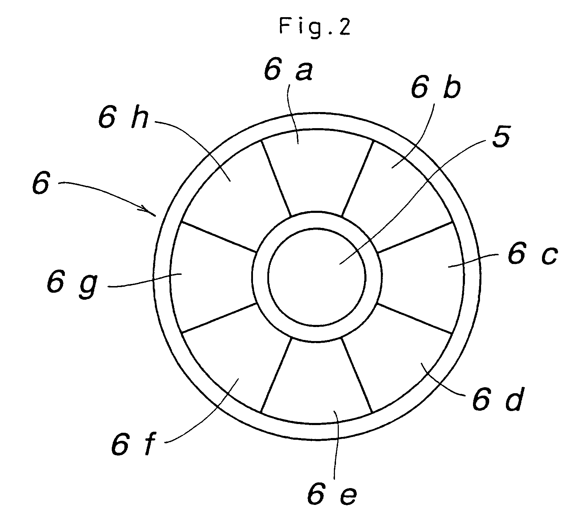

The card reader/writer 8 further comprises a light emitting device 5 consisting of a laser diode which directly faces the identification region 4 when the card 1 is in the illustrated position within the card reader/writer 8. The light emitting device 5 is surrounded by a plurality of light receiving parts 6a through 6h of a light receiving device 6 consisting of a multi-element photodiode which is divided into the parts 6a through 6d by radial lines as illustrated in Figure 2. The output of each of the parts 6a through 6h is connected to an identification unit 7 which determines the authenticity of the card 1 according to the inputs from the light receiving parts 6a through 6h.

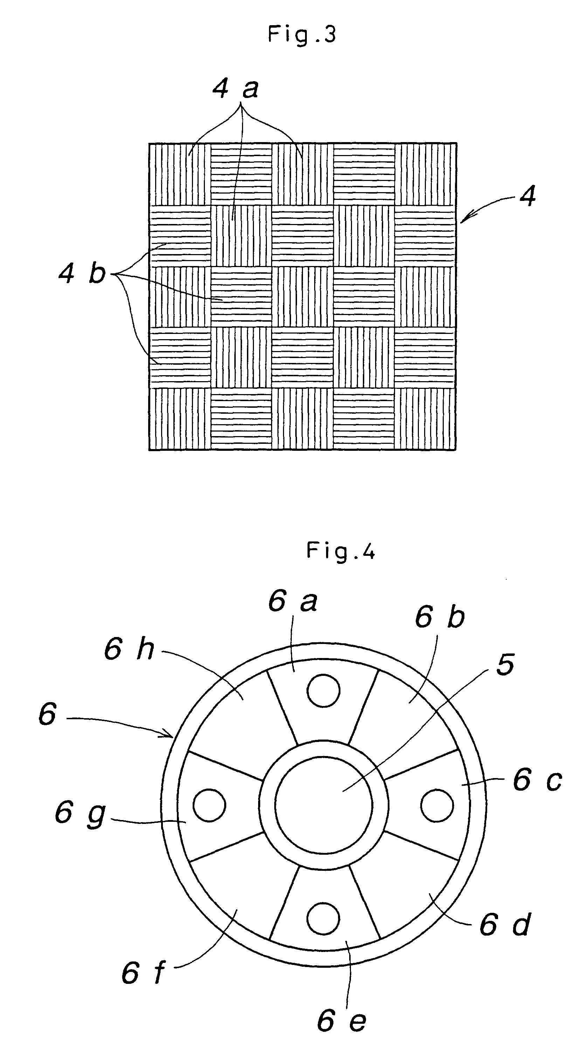

Referring to Figure 3, the identification region 4 includes a plurality of rectangular segments 4a and 4b. The segments 4a each consist of an area of diffraction grating having parallel lines extending vertically as seen in Figure 3 while the segments 4b each consist of an area of diffraction grating having parallel lines extending laterally as seen in Figure 3. These two kinds of segments are arranged in an alternating fashion or in a checkered pattern. Therefore, when an illuminating light is projected upon the identification region 4, the light reflected from the segments 4a is directed to the parts 6a and 6e while the light reflected from the segments 4b are directed to the parts 6c and 6g as illustrated in Figure 4.

In carrying out the process of identification, the card 1 is conveyed into the card reader/writer 8, and an illuminating light from the light emitting device 5 is projected upon the identification region 4. The light reflected from the identification region 4 is received by the light receiving device 6. The outputs from the different parts 6a through 6h of the light receiving device 6 are supplied to the identification circuit 7 which determines the authenticity of the card 1.

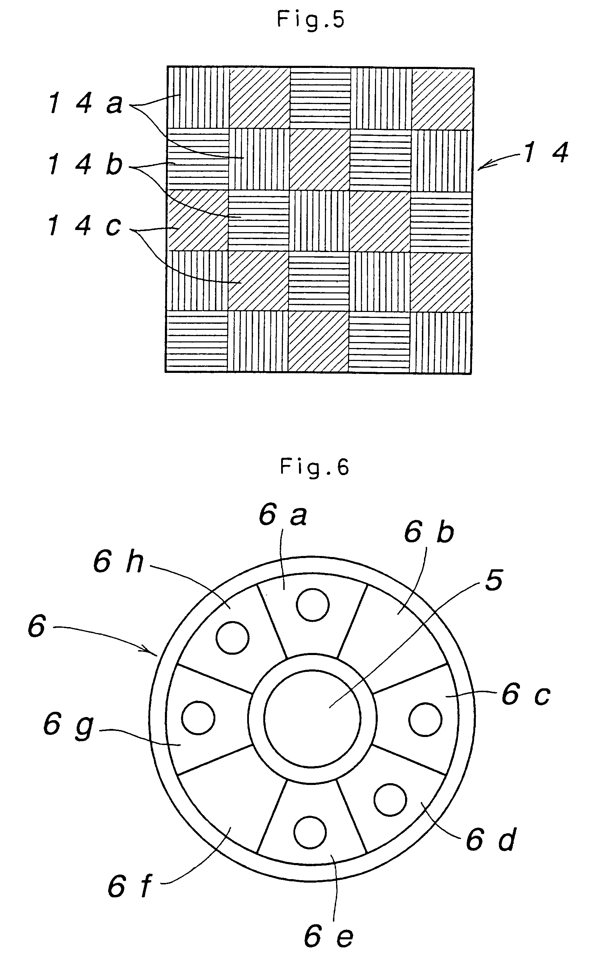

Figures 5 and 6 are views similar to Figures 3 and 4, respectively, and show a second embodiment of the present invention. The identification region 14 comprises segments 14c having obliquely extending parallel lines as well as segments 14a having vertically extending parallel lines and segments 14b having horizontally extending parallel lines. Therefore, the light reflected by the segments 14a is received by the parts 6a and 6e, the light reflected by the segments 14b are received by the parts 6c and 6g, and the light reflected by the segments 14c is received by the parts 6d and 6h. Otherwise, the second embodiment is similar to the first embodiment.

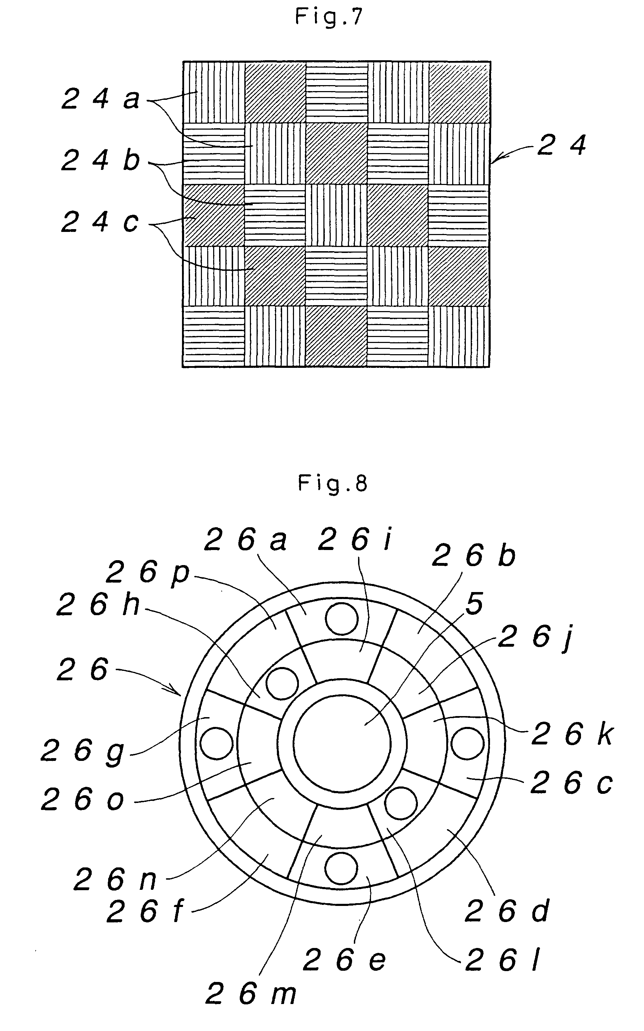

Figures 7 and 8 are views similar to Figures 3 and 4, respectively, and show a third embodiment of the present invention. The identification region 24 comprises segments 24c having obliquely extending parallel lines as well as segments 24a having vertically extending parallel lines and segments 24b having horizontally extending parallel lines. Further, the oblique lines of the segments 24c are finer in pitch that the vertical and lateral parallel lines of the segments 24a and 24b. In this embodiment, the light receiving device 26 comprises a plurality of light receiving parts 26a through 26p surrounding a light emitting device 5, and these light receiving parts of the light receiving device 26 are defined by a plurality of radial lines and a circle concentric to the light emitting device 5. In other words, the parts 25a through 26p of the light receiving device 26 are arranged around the light emitting device 5 in two concentric circles.

When an illuminating light is projected upon the identification region 24, the light reflected by the segments 24a is received by the parts 26a and 26e, and the light reflected by the segments 24b are received by the parts 26c and 26g. The light reflected by the segments 24c is received by the parts 261 and 26h because the segments 24c have parallel lines of a finer pitch and the reflected light of the first order is directed closer to the optical axis of the incident light. According to this embodiment, by varying the pitch of the parallel lines of some of the segments in addition to the direction of parallel lines, the reflective property of the identification region may be made even more diversified. Otherwise, the present embodiment is similar to the previous embodiments.

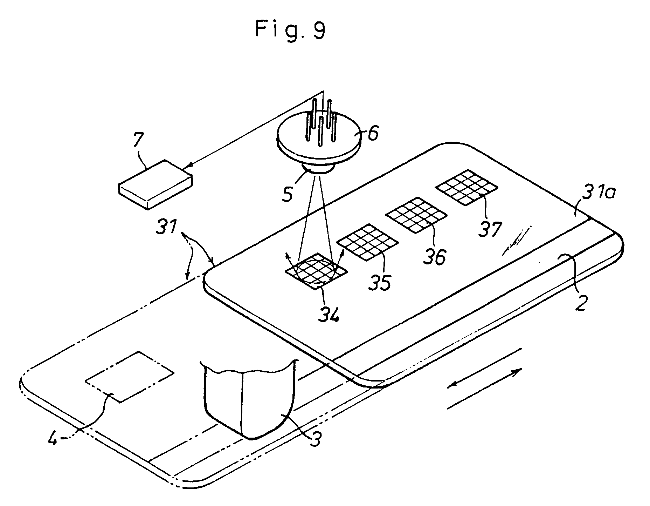

Figure 9 is a view similar to Figure 1 and shows a fourth embodiment of the present invention. In this embodiment, four identification regions 34 through 37 are provided on a major surface 31a of a magnetic card 31 in a single row along the direction in which the card 1 is conveyed. As the card 1 is conveyed, a light emitting device 5 projects an illuminating light upon each of the identification regions 34 through 37 in turn, and the light reflected by these identification regions 34 through 37 is received by a light receiving device 6 consisting of eight sector-shaped parts 6a through 6h surrounding the light emitting device 5.

The outputs from these parts 6a through 6h are supplied to an identification unit 7 which determines the authenticity of the card 1 according to these signals.

In this case, it is necessary for the card 1 to be authentic that each and every one of the identification regions 34 through 37 has a prescribed reflective directive. Thus, the overall reflective directive pattern is made even more diversified than the previous embodiments, and unauthorized duplication of the card is made even more difficult.

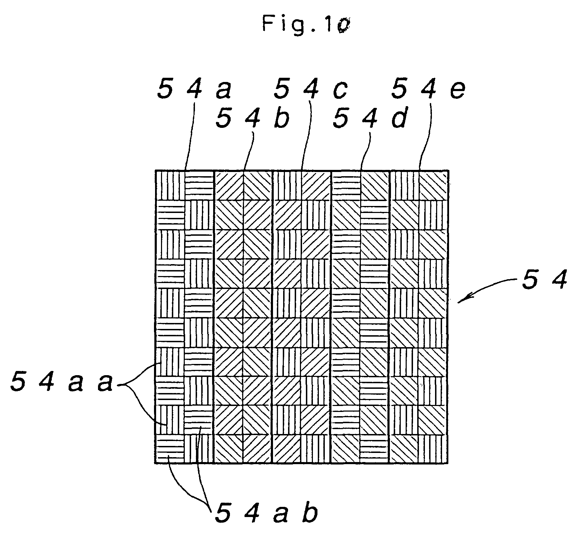

Figure 10 shows a fifth embodiment of the present invention in which the identification region 54 is divided into five stripes 54a through 54e and each of the stripes consists of a checkered pattern of two kinds of rectangular segments of diffraction grating. This shows yet another way to evenly distribute small segments of diffraction grating within the identification region. This embodiment is advantageous in discouraging unauthorized duplication particularly when the illuminating light scans each of the stripes in a sequential manner.

In the above embodiments, the identification regions consisted of a combination of small segments of diffraction grating. However, it is equally possible to use holograph or parallel grooves having a pitch (for instance, one to 100 grooves per mm) which may not be fine enough to achieve diffraction of light.

Further, the shape of each segment of the identification region is not limited to be a rectangle but each segment may also have triangular, circular, polygonal or other convenient shapes.

Obviously, the present invention is not limited to the above described embodiments but there are other possible variations. For instance, although the illuminating light was projected from the light emitting device upon the identification region more or less directly in the above described embodiments, lenses, mirrors, prisms and other optical elements may be placed in the light path to change the direction of the light path. A photodiode was used as the light receiving device in the above embodiments, but a position sensing device (PDS) may also be used. A position sensing device consists of a semiconductor device comprising a high resistivity Si i-layer, a p-layer formed on one side thereof or on its light receiving surface, and a n-layer formed on the other side of the i-layer, and a current proportional to the position of a light spot projected on the light receiving surface is produce from electrodes provided on the light receiving surface. Further, although a reflection type identification region was formed on the major surface of the card in the foregoing embodiments, it is also possible to place a similar region on both the surfaces of the card, or to form a transmission type identification region by providing a transparent part in a part of the card.

## Claims

1. A system for determining authenticity of an information storage card, the system comprising a card reader (8) and an information storage card (1), wherein:
said card comprises an information carrier (2) for storing information in coded form so as to be accessed by a card reader/writer (8) and at least one identification region (4,14,24,34,35,36,37,54) having a unique optical property thereon; and
said card reader/writer comprises:
means for accessing said coded information;
light emitting means (5) for projecting incident light upon the or each identification region carried by said card (1),
light receiving means (6) for detecting light reflected by or transmitted through the or each said identification region, and
an identification circuit (7) for evaluating said light received by said light receiving means and producing a signal for indicating authenticity of said card,
wherein said light receiving means (6) is provided with a plurality of parts (6a-6h), each of which is capable of individually detecting light reflected by or transmitted through the or each said identification region, said identification circuit (7) determines authenticity of said card according to a combination of said parts which detected light from at least one said identification region, and at least one said identification region (4,14,24,34,35,36,37,54) comprises a plurality of segments (4a,4b,14a,14b,14c,24a,24b,24c,54a-d) having at least two kinds of reflective or transmissive directivities which are arranged substantially closely to one another within said identification region, so that all of said segments may be accessed simultaneously by said incident light projected from said light emitted means (15),
**characterised in that**:
said segments (4,14,24,54) are arranged in a repeating alternating fashion or in a repeating chequered pattern.

2. A system according to claim 1, wherein each segment of said identification region (4,14,24,34,54) consists of an area of holograph.

3. A system according to Claim 1, wherein each segment of said identification region (4,14,24,34,54) consists of an area of diffraction grating.

4. A system according to Claim 1, wherein each segment of said identification region (4,14,24,34,54) consists of a surface provided with a plurality of parallel grooves having a selective reflective directive.

5. A system according to any one of the preceding claims, wherein said parts (26) of said light receiving means (5) are arranged around said light emitting means along a circle centred substantially around said light emitting means.

6. A system according to Claim 1, wherein said parts (26) of said light receiving means are arranged around said light emitting means along at least two concentric circles concentric to said light emitting means (5).

7. A system according to Claim 1, wherein each of said segments (54a-54d) is substantially rectangular in shape.

## Patentansprüche

1. System zur Bestimmung der Echtheit einer Informationsspeicher-Karte, wobei das System einen Kartenleser (8) und eine Informationsspeicher-Karte (1) aufweist und wobei
die Karte einen Datenträger (2) zur Speicherung von Daten in kodierter Form, ausgebildet für Zugriffe eines Kartenlesers/-schreibers (8), und mindestens einen Identifizierungsbereich (4, 14, 24, 34, 35, 36, 37, 54) mit einer spezifischen optischen Eigenschaft darauf aufweist; und
der Kartenleser/-schreiber
eine Einrichtung für Zugriffe auf die kodierten Daten,
eine licht-aussendende Einrichtung (5) für die Ausrichtung einfallenden Lichts auf den oder jeden Identifizierungsbereich, der auf der Karte (1) vorhanden ist,
eine licht-empfangende Einrichtung (6) für die Detektierung von Licht, welches von dem oder jedem Identifizierungsbereich reflektiert oder hindurchgelassen wird, und einen Identifizierungs-Schaltkreis (7) für die Auswertung des von der licht-empfangenden Einrichtung empfangenen Lichts und für die Erzeugung eines Signals, um die Echtheit der Karte anzuzeigen, aufweist,
wobei die licht-empfangende Einrichtung (6) mit einer Mehrzahl von Einzelteilen (6a-6h), von denen jeder einzeln für die Detektierung von Licht, das von dem oder jedem Identifizierungsbereich reflektiert oder hindurchgelassen wird, ausgebildet ist,
der Identifizierungs-Schaltkreis (7) die Echtheit der Karte aufgrund einer Kombination derjenigen Einzelteile, die Licht von mindestens einem Identifizierungsbereich detektiert haben, bestimmt,
und mindestens ein Identifizierungsbereich (4, 14, 24, 34, 35, 36, 37, 54) eine Mehrzahl Segmente (4a, 4b, 14a, 14b, 14c, 24a, 24b, 24c, 54a-d) aufweist, die über mindestens zwei Arten von reflektierenden oder hindurchlassenden Richtwirkungen verfügen, die hinreichend dicht nebeneinander innerhalb des Identifizierungsbereiches angeordnet sind, so dass auf alle diese Segmente gleichzeitig mittels des einfallenden Lichtes, das von der licht-aussendenden Einrichtung (15) ausgerichtet wird, zugegriffen werden kann,
**dadurch gekennzeichnet, dass**
die Segmente (4, 14, 24, 54) in einer sich wiederholenden alternierenden Weise oder in einem sich wiederholenden karo-artigen Raster angeordnet sind.

2. System nach Anspruch 1, wobei jedes Segment des Identifizierungsbereiches (4, 14, 24, 34, 54) aus einem Holographie- Gebiet besteht.

3. System nach Anspruch 1, wobei jedes Segment des Identifizierungsbereiches (4, 14, 24, 34, 54) aus einem Beugungsgitter-Gebiet besteht.

4. System nach Anspruch 1, wobei jedes Segment des Identifizierungsbereiches (4, 14, 24, 34, 54) aus einer Oberfläche besteht, die mit einer Mehrzahl paralleler Furchen mit einer spezifischen reflektierenden Richtwirkung versehen ist.

5. System nach einem der vorhergehenden Ansprüche, wobei die Einzelteile (26) der licht-empfangenden Einrichtung (5) um die licht-aussendende Einrichtung herum entlang eines Kreises angeordnet sind, der im wesentlichen um die licht-aussendende Einrichtung zentriert ist.

6. System nach Anspruch 1, wobei die Einzelteile (26) der licht-empfangenden Einrichtung um die licht-aussendende Einrichtung herum entlang mindestens zweier konzentrischer Kreise angeordnet sind, die konzentrisch zu der licht-aussendenden Einrichtung (5) sind.

7. System nach Anspruch 1, wobei jedes der Segmente (54a-54d) im wesentlichen eine rechteckige Form aufweist.

## Revendications

1. Système pour déterminer l'authenticité d'une carte de stockage d'information, le système comprenant un lecteur de carte (8) et une carte de stockage d'information (1), dans lequel :
ladite carte comprend un support (2) pour stocker des informations sous une forme codée de façon à être accédé par un dispositif de lecture/écriture de carte (8) et au moins une région d'identification (4, 14, 24, 34, 35, 36, 37, 54) présentant une propriété optique unique ; et
ledit dispositif de lecture/écriture comprend :
un moyen pour accéder auxdites informations codées ;
un moyen émetteur de lumière (5) pour projeter une lumière incidente sur la, ou chaque, région d'identification portée par ladite carte (1) ;
un moyen récepteur de lumière (6) pour détecter la lumière réfléchie par, ou transmise à travers, ladite, ou chaque dite, région d'identification, et
un circuit d'identification (7) pour évaluer ladite lumière reçue par ledit moyen récepteur de lumière et pour produire un signal pour indiquer l'authenticité de ladite carte,
dans lequel ledit moyen de réception de lumière (6) dispose d'une pluralité de parties (6a-6h), chacune d'elles étant capable de détecter de manière individuelle la lumière réfléchie par, ou transmise à travers, ladite, ou chaque dite, région d'identification, ledit circuit d'identification (7) déterminant l'authenticité de ladite carte selon une combinaison desdites parties qui ont détecté la lumière à partir d'au moins une dite région d'identification, et au moins une dite région d'identification (4, 14, 24, 34, 35, 36, 37, 54) comprenant une pluralité de segments (4a, 4b, 14a, 14b, 24a, 24b, 24c, 54a-d) ayant au moins deux types de directivités réflexives ou transmissives qui sont disposées à proximité très étroite l'une de l'autre dans ladite région d'identification, de telle façon que tous lesdits segments puissent être accédés simultanément par ladite lumière incidente projetée à partir dudit moyen d'émission de lumière (15),
**caractérisé en ce que** :
lesdits segments (4, 14, 24, 54) sont disposés de manière alternée répétitive ou suivant un motif répétitif en damiers.

2. Système selon la revendication 1, dans lequel chaque segment de ladite région d'identification (4, 14, 24, 34, 54) consiste en une zone d'hologramme.

3. Système selon la revendication 1, dans lequel chaque segment de ladite région d'identification (4, 14, 24, 34, 54) consiste en une zone de réseau de diffraction.

4. Système selon la revendication 1, dans lequel chaque segment de ladite région d'identification (4, 14, 24, 34, 54) consiste en une surface disposant d'une pluralité de rainures parallèles ayant une directivité réflexive sélective.

5. Système selon l'une quelconque des revendications précédentes, dans lequel lesdites parties (26) dudit moyen de réception de lumière (5) sont disposées autour du moyen d'émission de lumière le long d'un cercle parfaitement centré autour dudit moyen d'émission de lumière.

6. Système selon la revendication 1, dans lequel lesdites parties (26) dudit moyen de réception de lumière sont disposées autour dudit moyen d'émission de lumière le long d'au moins deux cercles concentriques centrés sur ledit moyen d'émission de lumière (5).

7. Système selon la revendication 1, dans lequel chacun desdits segments (54a-54d) a une forme parfaitement rectangulaire
